# EUROPEAN PATENT APPLICATION

(11) **EP 1 381 175 A1**
(43) Date of publication of application: **14.01.2004**
(21) Application number: 02254892.9
(22) Date of filing: 11.07.2002
(51) Int. Cl.: H04B 10/158, H04B 10/08

(54) **Apparatus and method for data tag signal recovery**

(71) Applicant: Agilent Technologies, Inc. - a Delaware corporation -, Palo Alto, CA 94303-0870 (US)
(72) Inventor: Bardsley, Richard, Andover, Hampshire SP10 2JQ (GB); Wilkinson, Stuart, Lawford, Manningtree, Essex CO11 2SX (GB)
(74) Representative: Coker, David Graeme

(57) **Abstract**

In an optical communications system, it is known for system diagnosis, to label a data stream with a data tag signal comprising information such as the originating laser device of the data stream. In order to recover the data tag signal from the data stream it is known to remove the data tag signal using a sense resistor in the voltage bias path of a photodetector employed to receive the data stream. Such a method complicates accurate biasing of the photodetector. The present invention therefore provides a data tag recovery apparatus (50) comprising a photodetector (54) to receive an optical signal (120) comprising a data input signal and a data tag input signal. The photodetector (54) is coupled to an amplifier (58) having outputs (60, 62) coupled to a data output module (64) and a data tag output module (90) arranged to recover the data input signal and the data tag input signal respectively from the data path of the photodetector (54).

## Description

The present invention relates to an apparatus and a method for the recovery of a data tag signal from a data stream comprising a data signal of a type where the data tag signal is used to label and identify the data stream.

In an optical communications system employing a Wavelength Division Multiplexing (WDM) scheme, a number of laser devices are employed in a transmitter unit to emit electromagnetic radiation at different frequencies. In order to generate electromagnetic signals of different frequencies, the electromagnetic radiation is modulated wherein information (data) is impressed upon the electromagnetic radiation. Electromagnetic signals of a particular frequency constitute a particular data stream which is typically combined with other data streams of differing frequencies to produce a single multiplexed signal to be propagated along the network of the optical communications system. The multiplexed signal is demultiplexed into its component data streams when a data stream is required to be redirected along its transmission route by, for example, a switching device or when the data stream reaches its intended destination.

For communications system diagnosis, it is extremely useful to label individual data streams with information such as the originating laser device of the emitted electromagnetic radiation or the intended destination of the data stream. These labels are known as 'data tag signals' and can also be impressed upon the data stream by modulation. A data tag signal is given a frequency far removed from that of the data signal (usually at a much lower frequency) in order to obviate any interference or corruption of the data signal by the data tag signal. For example, a communications system operating with data streams at 2.5 Gbits per second, a suitable frequency range for a data tag signal is in the range of around 50 kHz to a few hundred kHz.

It is known to recover a data tag signal from a data stream using an optical splitter disposed in the path of the data stream to direct a portion of the data stream to a data signal receiver and a portion of the data stream to a data tag signal receiver. The data signal receiver recovers the data signal information and the data tag signal receiver filters its received portion of the data stream at the frequency of the data tag signal in order to recover the data tag signal information. Such a method is disadvantageous because two receivers are used which takes up valuable component space and the use of an optical splitter in the path of the data stream reduces overall operational efficiency because the optical power of the data stream is split between the two receivers.

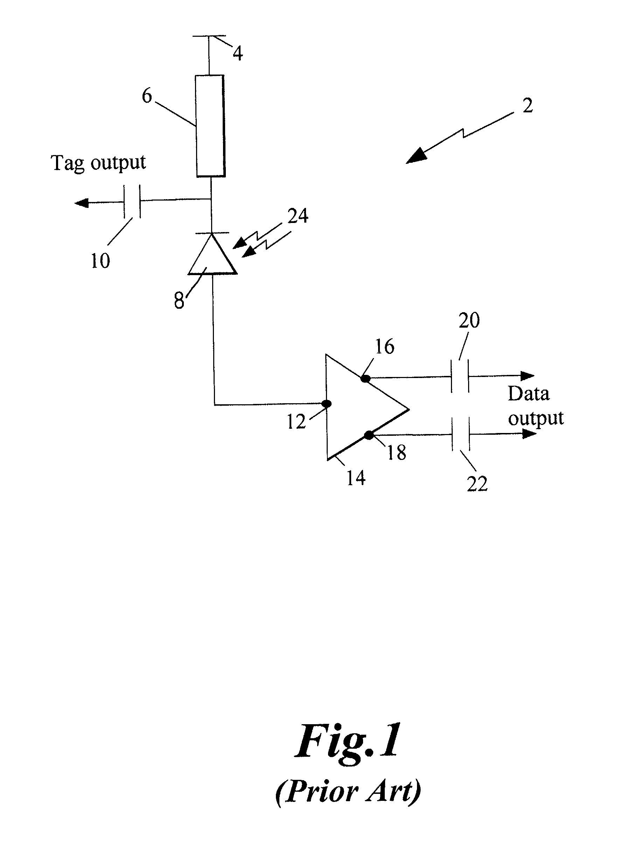

Alternatively it is known to recover a data tag signal from a data stream using the apparatus illustrated in Figure 1. Referring to Figure 1, a data tag signal recovery apparatus 2 comprises a voltage supply rail 4 coupled to a first terminal of a sense resistor 6, the resistor 6 having a second terminal coupled to the cathode terminal of a photodetector 8. A first terminal of a first capacitor 10 is also coupled to the second terminal of the resistor 6 and the cathode terminal of the photodetector 8. A second terminal of the first capacitor 10 is also coupled to a first output device (not shown) as is known in the art.

The anode terminal of the photodetector 8 is coupled to a first input terminal 12 of a transimpedance amplifier 14. A first output terminal 16 of the transimpedance amplifier 14 is coupled to a first terminal of a second capacitor 20 and a second output terminal 18 of the transimpedance amplifier 14 is coupled to a first terminal of a third capacitor 22. The second terminals of the second and third capacitors 20,22 are coupled to a second output device (not shown) as is known in the art.

In operation, a bias voltage (V_{BlAS}) is applied across the photodetector 8 from the voltage supply rail 4. An optical data stream 24 comprising a data input signal and a data tag input signal is incident upon the photodetector 8 and in response to the incident optical data stream 24, the photodetector 8 generates a signal in the form of, for example, a current to be received at the first input terminal 12 of the transimpedance amplifier 14. The transimpedance amplifier 14 converts the received current into a differential voltage using techniques known in the art in order to permit recovery by the second output device of a data signal corresponding to the data input signal.

The data tag signal is recovered from the signal generated by the photodetector 8 by providing the resistor 6 in the path of the photodetector 8 V_{BlAS} supply. The resistor 6 acts as a current to voltage converter permitting the data tag signal to be AC coupled off the photodetector 8 V_{BlAS} supply via the first capacitor 10 to the first output device as is known in the art in order to permit recovery by the first output device of the data tag signal corresponding to the data tag input signal. Although the data input signal is also coupled off the first capacitor 10, the first output device will only have a bandwidth suitable for the data tag signal, and so the data input signal is not permitted to pass.

This method is disadvantageous because the resultant voltage drop across the resistor 6 complicates the biasing of the photodetector 8 and noise may also be fed back onto the photodetector 8 V_{BIAS} supply reducing the data tag signal recovery apparatus 2 signal to noise ratio.

The present invention therefore seeks to provide an apparatus and method for data tag signal recovery, which overcomes, or at least reduces the above-mentioned problems of the prior art.

According to a first aspect of the present invention, there is provided a data tag recovery apparatus comprising a photodetector for generating an output signal in response to a received optical signal comprising a data input signal and a data tag input signal, the data tag input signal having a different frequency to the data input signal; an amplifier arranged to receive the output signal and generate an amplified signal; a data output module being coupled to an output of the amplifier for generating a data output signal corresponding to the data input signal; characterized in that: a data tag output module, having a frequency range corresponding to the frequency range of the data tag input signal, being coupled to the output of the amplifier so as to generate a data tag output signal corresponding to the data tag input signal.

Preferably, the photodetector is a PIN photodiode or an avalanche photodiode.

Preferably, the amplifier is a transimpedance amplifier.

Preferably, the output of the amplifier is a differential output.

Preferably, the data output module comprises a postamplifier and means for AC coupling the postamplifier to the amplifier.

Preferably, the data tag output module comprises a low frequency amplifier and means for AC coupling the low frequency amplifier to the amplifier.

Very preferably, the low frequency amplifier is an operational amplifier.

Preferably, the data input signal is in the frequency range of four decades below the bit rate of the data input signal.

Preferably, the data tag input signal is below the frequency of 600 kHz for a 2.488 Gbit system.

Very preferably, the data tag input signal is at a frequency of substantially 250 kHz.

According to a second aspect of the present invention, there is provided a method of recovering a data tag signal, the method comprising the steps of: generating an output signal in response to a received optical signal comprising a data input signal and a data tag input signal, the data tag input signal having a different frequency to the data input signal; amplifying the first output signal to generate an amplified signal; processing the amplified signal to generate a data output signal corresponding to the data input signal; characterised by: processing the amplified signal to generate a data tag output signal corresponding to the data tag input signal.

The present invention therefore provides a simple, compact and efficient apparatus and method wherein a separate photodetector is not needed to detect a data tag signal and therefore the optical input power to the apparatus is not reduced by splitting the input signal between two receivers. Biasing of the photodetector is therefore uncomplicated as there is not a sense resistor to provide a voltage drop, obviating or at least mitigating a requirement for additional hardware or software development for biasing.

At least one embodiment of the present invention will now be described, by way of example only, with reference to the accompanying drawing, in which:

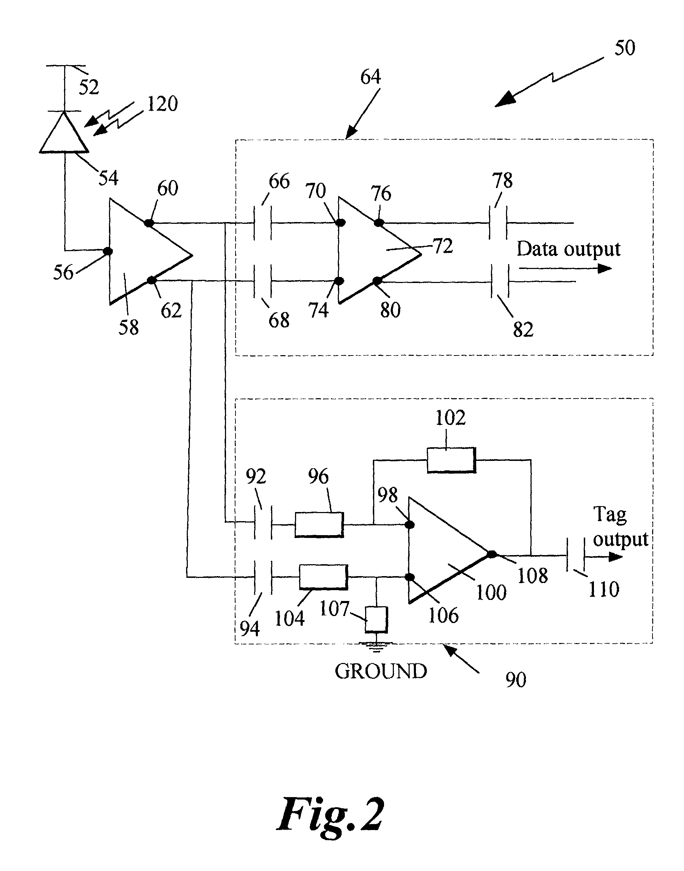

**Figure 2** is a schematic diagram of a data tag signal recovery apparatus.

Referring to Figure 2, a data tag signal recovery apparatus 50 comprises a voltage supply rail 52 coupled to a cathode terminal of a photodetector 54, for example a photodiode such as a PIN detector or an avalanche photodiode (APD). An anode terminal of the photodetector 54 is coupled to a first input terminal 56 of a first amplifier, for example a transimpedance amplifier 58 having a first output terminal 60 and a second output terminal 62.

A data output module 64 comprises a first terminal of a first capacitor 66 coupled to the first output terminal 60 of the transimpedance amplifier 58 and a first terminal of a second capacitor 68 coupled to the second output terminal 62 of the transimpedance amplifier 58. A second terminal of the first capacitor 66 is coupled to a first input terminal 70 of a second amplifier, for example a postamplifier 72 and a second terminal of the second capacitor 68 is coupled to a second input terminal 74 of the postamplifier 72. A first output terminal 76 of the postamplifier 72 is coupled to a first terminal of a third capacitor 78 and a second output terminal 80 of the postamplifier 72 is coupled to a first terminal of a fourth capacitor 82.

A data tag output module 90 comprises a first terminal of a fifth capacitor 92 coupled to the first output terminal 60 of the transimpedance amplifier 58 and a first terminal of a sixth capacitor 94 coupled to the second output terminal 62 of the transimpedance amplifier 58. A second terminal of the fifth capacitor 92 is coupled to a first terminal of a first resistor 96, a second terminal of which is coupled to a first input terminal 98 of a third amplifier, for example an operational amplifier 100. The second terminal of the first resistor 96 is also coupled to a first terminal of a first feedback resistor 102. A second terminal of the sixth capacitor 94 is coupled to a first terminal of a second resistor 104, the second terminal of which is coupled to a second input terminal 106 of the operational amplifier 100 and is also connected to ground via a third resistor 107. It is also possible to recover the data tag signal by coupling the first input terminals of the fifth capacitor 92 and sixth capacitor 94 to the second terminals of the first capacitor 66 and the second capacitor 68 respectively. It is also possible to use a single ended amplifier design, rather than a differential amplifier as described above. In the single ended amplifier design, the sixth capacitor 94 and the second resistor 104 are omitted and the second terminal 106 of the operational amplifier 100 is coupled to a virtual ground as is known in the art.

A first output terminal 108 of the operational amplifier 100 is coupled to a second terminal of the first feedback resistor 102 and a first terminal of a seventh capacitor 110.

In operation, a bias voltage (V_{BlAS}) is applied across the photodetector 54 from the voltage supply rail 52. The magnitude of bias voltage applied is dependent upon the type of photodetector 54 employed, for example a PIN detector may require a V_{BlAS} of around 3 Volts whereas an APD may require a V_{BlAS} of around 70 Volts for operation. An optical data stream 120 comprising a data input signal and a data tag input signal received from, for example, an optical fibre is incident upon the photodetector 54, the data tag input signal typically having a frequency of around 250 kHz for a 2.488 Gbit system, that is, below the lower end of the data input signal frequency range. In response to the incident data stream, the photodetector 54 generates a signal in the form of, for example, a current to be received at the first input terminal 56 of the transimpedance amplifier 58. At low light levels the current generated by the photodetector 54 may be at the µamp level while at high light levels the current generated may be at the mamps level. The transimpedance amplifier 58 converts the received current into a first amplified signal such as a differential voltage, the components of which are applied to the first output terminal 60 and the second output terminal 62 of the transimpedance amplifier 58. The transimpedance amplifier 58 is designed, in this example, with a lower 3dB cut-off frequency below the lowest frequency of the data tag input signal. The first amplified signal generated by the transimpedance amplifier 58 is typically in the range 10-20 mV at low input powers.

In order to recover a data output signal corresponding to the data input signal the first amplified signal output by the transimpedance amplifier 58 is received by the data output module 64 and AC coupled by way of the first and second capacitors 66, 68 to the first and second input terminals 70, 74 of the postamplifier 72. The postamplifer 72 generates and applies a second amplified signal in response to the first amplified signal to its first and second output terminals 76, 80 which is received by the third and fourth capacitors 78, 82 in order to permit recovery of the data signal corresponding to the data input signal.

In order to recover a data tag output signal corresponding to the data tag input signal the first amplified signal output by the transimpedance amplifier 58 is received by the data tag output module 90 and AC coupled by way of the fifth and sixth capacitors 92, 94 to the first and second input terminals 98, 106 of the operational amplifier 100 via the first and second resistors 96, 104 respectively. The operational amplifier 100 is, in this example, a low frequency amplifier with a cut-off frequency of around 400 kHz so that only the component of the received first amplified signal corresponding to the data tag input signal is amplified and out-of-band noise is reduced. Also, in this example, the operational amplifier 100 has its gain set so that it does not saturate at maximum input to obviate or at least mitigate erroneous frequency components being added into the data tag output signal. In response to the received first amplified signal the operational amplifier 100 applies a third amplified signal to its first output terminal 108. The third amplified signal is received by the seventh capacitor 110 in order to permit recovery of the data tag signal corresponding to the data tag input signal. The above apparatus therefore provides a recovery of a data tag signal on an optical data signal from the data path of a fibre optic receiver.

It should be appreciated that whilst the above embodiment has been described having a differential input to the data output module 64 and the data tag output module 90, a single ended input arrangement to the data output module 64 and/or the data tag output module 90 is possible using circuit modifications known in the art and described above. Furthermore, additional low-pass and high-pass filtering may also be added at the data tag output module 90 amplification stage, such filtering adapted to be complimentary to the frequency of the data tag input signal.

## Claims

1. A data tag recovery apparatus (50) comprising:
a photodetector (54) for generating an output signal in response to a received optical signal (120) comprising a data input signal and a data tag input signal, the data tag input signal having a different frequency to the data input signal;
an amplifier (58) arranged to receive the output signal and generate an amplified signal;
a data output module (64) being coupled to an output of the amplifier (58) for generating a data output signal corresponding to the data input signal;
**characterized in that**: a data tag output module (90), having a frequency range corresponding to the frequency range of the data tag input signal, being coupled to the output of the amplifier (58) for generating a data tag output signal corresponding to the data tag input signal.

2. A data tag recovery apparatus (50) as claimed in Claim 1, wherein the photodetector (54) is a PIN photodiode or an avalanche photodiode.

3. A data tag recovery apparatus (50) as claimed in Claim 1 or Claim 2, wherein the amplifier (58) is a transimpedance amplifier.

4. A data tag recovery apparatus as claimed in Claim 3, wherein the output of the amplifier (58) is a differential output (60, 62).

5. A data tag recovery apparatus (50) as claimed in any one of the preceding claims, wherein the data output module (64) comprises a postamplifier (72) and means for AC coupling the postamplifier (72) to the amplifier (58).

6. A data tag recovery apparatus (50) as claimed in any one of the preceding claims, wherein the data tag output module (90) comprises a low frequency amplifier (100) and means for AC coupling the low frequency amplifier (100) to the amplifier (58).

7. A data tag recovery apparatus as claimed in Claim 4, wherein the low frequency amplifier (100) is an operational amplifier.

8. A data tag recovery apparatus as claimed in any one of the preceding claims, wherein the data input signal is in the frequency range of four decades below the bit rate of the data input signal.

9. A data tag recovery apparatus as claimed in Claim 6, wherein the data tag input signal is below the frequency of 600 kHz for a 2.488 Gbit system.

10. A data tag recovery apparatus as claimed in Claim 6, wherein the data tag input signal is at a frequency of substantially 250 kHz for a 2.488 Gbit system.

11. A method of recovering a data tag signal, the method comprising the steps of:
generating an output signal in response to a received first input signal comprising a data input signal and a data tag input signal, the data tag input signal having a different frequency to the data input signal;
amplifying the output signal to generate an amplified signal;
processing the amplified signal to generate a data output signal corresponding to the data input signal;
**characterised by**: processing the amplified signal to generate a data tag output signal corresponding to the data tag input signal.
